# EUROPÄISCHE PATENTSCHRIFT

(11) **EP 0 409 327 B1**
(45) Veröffentlichungstag und Bekanntmachung des Hinweises auf die Patenterteilung: **08.11.1995**
(21) Anmeldenummer: 90201898.5
(22) Anmeldetag: 12.07.1990
(51) Int. Cl.: H02H 3/20, H02H 1/00

(54) **Stromversorgungseinrichtung mit Gleichspannungsüberwachungsschaltung**
Power supply with DC-voltage monitoring circuit
Dispositif d'alimentation de courant avec circuit de surveillance

(30) Priorität: 18.07.1989 DE 3923710
(43) Veröffentlichungstag der Anmeldung: 23.01.1991
(73) Patentinhaber: Philips Patentverwaltung GmbH, 22335 Hamburg (DE); Philips Electronics N.V., 5621 BA Eindhoven (NL)
(72) Erfinder: Krahl, Burghard, Dipl.-Ing., D-8566 Leinburg (DE)
(74) Vertreter: Peuckert, Hermann, Dipl.-Ing.

(56) Entgegenhaltungen:
- DE-A- 3 707 973
- DE-B- 1 196 773
- DE-B- 1 588 674
- US-A- 3 311 907
- US-A- 3 573 554

## Beschreibung

Die Erfindung betrifft eine Stromversorgungseinrichtung mit Überwachungsschaltung für eine auf ein Bezugspotential bezogene erste Gleichspannung mit einem Signalübertragungselement, wobei parallel zur ersten Gleichspannung eine Reihenschaltung aus einer Zenerdiode und einem an den positiven bzw. negativen Pol der ersten Gleichspannung angeschlossenen Widerstand angeordnet ist und wobei der Verbindungspunkt von Zenerdiode und Widerstand mit der Basis eines Transistors verbunden und eine erste Elektrode des Transistors an einen ersten Anschluß des Signalübertragungselementes und eine zweite Elektrode an den positiven bzw. negativen Pol der ersten Gleichspannung angeschlossen ist.

Stromversorgungseinrichtungen mit Überwachungsschaltungen werden beispielsweise benötigt, um bei Störungen die angeschlossenen Verbraucher vor Überspannungen zu schützen oder bei Unterspannungen zu verhindern, daß beispielsweise fehlerhafte Daten ausgegeben werden, ohne daß dies rechtzeitig erkannt wird. Daher soll die Störung einer Ausgangsgleichspannung, d.h. das Abweichen von einem vorgegebenen Sollwert, sicher angezeigt werden oder mit Hilfe eines Signalübertragungselements Sicherungsmaßnahmen eingeleitet werden. Im Falle einer sekundärseitigen Störung werden, insbesondere bei einer getakteten Stromversorgungseinrichtung, mittels auf der Primärseite vorgesehener Stellglieder die Ausgangsgleichspannungen entsprechend geregelt oder abgeschaltet. Ist eine galvanische Trennung von Sekundärseite und der beispielsweise auf die Primärseite eines Transformators wirkenden Regelschaltung erforderlich, so wird zur Übertragung der Steuersignale der Überwachungsschaltung ein Signalübertragungselement mit galvanisch getrennten Ein- und Ausgängen, beispielsweise ein Optokoppler, verwendet.

Aus DE-B 1 196 773 ist eine Stromversorgungseinrichtung mit Überwachungsschaltung der eingangs genannten Art bekannt. Dabei liegt parallel zwischen einer Gleichspannung und einer Bezugsspannung eine Reihenschaltung aus einer Zenerdiode und einem Widerstand, wobei der Verbindungspunkt von Zenerdiode und Widerstand mit der Basis eines Transistors verbunden und eine erste Elektrode des Transistors an ein Relais und eine zweite Elektrode an den positiven Pol der Gleichspannung angeschlossen ist. Übersteigt die Spannung zwischen Gleichspannung und Bezugsspannung einen bestimmten wert, so leitet der Transistor und das Relais zieht an.

Aus DE-A 37 07 973 ist eine Stromversorgungseinrichtung mit Überspannungsschutzschaltung und einem Signalübertragungselement bekannt. Dabei ist zwischen einem Bezugspotential und einer gegenüber diesem Bezugspotential positiven oder negativen Ausgangsgleichspannung jeweils eine Reihenschaltung aus einer Zenerdiode und einer Diode angeordnet, wobei zwischen den Verbindungspunkten von Zenerdiode und Diode der beiden Reihenschaltungen insbesondere ein als Optokoppler mit Leuchtdiode ausgebildetes Signalübertragungselement eingeschaltet ist. Wenn keine Überspannungen auftreten, werden die Zenerdioden im Sperrzustand betrieben, die Leuchtdiode emittiert nicht. Tritt bei einer Ausgangsgleichspannung eine Überspannung auf, so wird die entsprechende Zenerdiode leitend und der Strom fließt durch die Leuchtdiode des Signalübertragungselements. Die Ansprechgenauigkeit des Signalübertragungselements und damit der Überspannungsschutzschaltung wird dabei von den Toleranzen einer Vielzahl verschiedener Bauelemente bestimmt, d.h. im einzelnen von den Toleranzen der Diode, der Zenerdiode, des Signalübertragungselements und eines in Reihe dazu liegenden Vorwiderstands und weist somit bei erhöhten Anforderungen eine unzureichende Ansprechgenauigkeit auf.

Der Erfindung liegt die Aufgabe zugrunde, eine Stromversorgungseinrichtung mit Überwachungsschaltung der eingangs genannten Art anzugeben, bei der die Überwachungsschaltung bei gleichzeitig geringem Bauteileaufwand eine erhöhte Ansprechgenauigkeit aufweist.

Diese Aufgabe wird bei einer Stromversorgungseinrichtung mit Überspannungüberwachungsschaltung der eingangs genannten Art dadurch gelöst, daß zur Überwachung mindestens einer weiteren Gleichspannung mit einer gegenüber der ersten Gleichspannung unterschiedlichen Polarität eine weitere Reihenschaltung aus einer weiteren Zenerdiode und einem an den positiven bzw. negativen Pol der weiteren Gleichspannung angeschlossenen weiteren Widerstand angeordnet ist, daß der Verbindungspunkt von Zenerdiode und Widerstand mit der Basis eines weiteren Transistors verbunden und eine erste Elektrode des Transistors an einen zweiten Anschluß des Signalübertragungselementes und eine zweite Elektrode an den positiven bzw. negativen Pol der weiteren Gleichspannung angeschlossen ist, daß die beiden Anschlußklemmen des Signalübertragungselements jeweils über eine Diode mit dem Bezugspotential verbunden sind und daß die Überwachungsschaltung so ausgelegt ist, daß bei Auftreten einer Überspannung ein Stromfluß über den dem betroffenen Pol zugeordneten Transistor über den einen Anschluß durch das Signalübertragungselement und die Diode des jeweils anderen Anschlusses erfolgt.

Bei einer Stromversorgungseinrichtung mit Unterspannungüberwachungsschaltung der eingangs genannten Art wird diese Aufgabe dadurch gelöst, daß zur Überwachung mindestens einer weiteren Gleichspannung mit einer gegenüber der ersten Gleichspannung unterschiedlichen Polarität eine weitere Reihenschaltung aus einer weiteren Zenerdiode und einem an den positiven bzw. negativen Pol der weiteren Gleichspannung angeschlossenen weiteren Widerstand angeordnet ist, daß der Verbindungspunkt von Zenerdiode und Widerstand mit der Basis eines weiteren Transistors verbunden und eine erste Elektrode des Transistors an einen zweiten Anschluß des Signalübertragungselementes und eine zweite Elektrode an den positiven bzw. negativen Pol der weiteren Gleichspannung angeschlossen ist, daß die beiden Zenerdioden mit dem Bezugspotential verbunden sind und daß die Überwachungsschaltung so ausgelegt ist, daß über die beiden Transistoren (T1, T2) Strom durch das Signalübertragungselement fließt, wenn beide Gleichspannungen normale Werte aufweisen, und daß bei Auftreten einer Unterspannung der dem betroffenen Pol zugeordnete Transistor den Stromfluß unterbricht.

Die Überwachung von weiteren Gleichspannungen unterschiedlicher Polarität auf Überspannung wird auf einfache Weise dadurch sichergestellt, daß zur Überwachung weiterer Gleichspannungen unterschiedlicher Polarität parallel zur jeweiligen Gleichspannung eine weitere Reihenschaltung aus einer Zenerdiode und einem an den positiven bzw. negativen Pol der weiteren Gleichspannung angeschlossenen weiteren Widerstand angeordnet ist, wobei der Verbindungspunkt von Zenerdiode und Widerstand jeweils mit der Basis eines weiteren Transistors verbunden und eine erste Elektrode jedes Transistors an das Signalübertragungselement und eine zweite Elektrode an den positiven bzw. negativen Pol der Gleichspannung angeschlossen ist.

Weitere vorteilhafte Ausgestaltungsformen sind in den Unteransprüchen enthalten.

Im folgenden wird die Erfindung anhand der in den Figuren dargestellten Ausführungsbeispiele näher erläutert.

Fig. 1 zeigt eine Stromversorgungseinrichtung mit Überspannungsüberwachungsschaltung für zwei Gleichspannungen unterschiedlicher Polarität.

Fig. 2 zeigt eine Stromversorgungseinrichtung mit Überspannungsüberwachungsschaltung für zwei positive und zwei negative Gleichspannungen.

Fig. 3 zeigt eine Stromversorgungseinrichtung mit Unterspannungsüberwachungsschaltung für zwei Gleichspannungen unterschiedlicher Polarität.

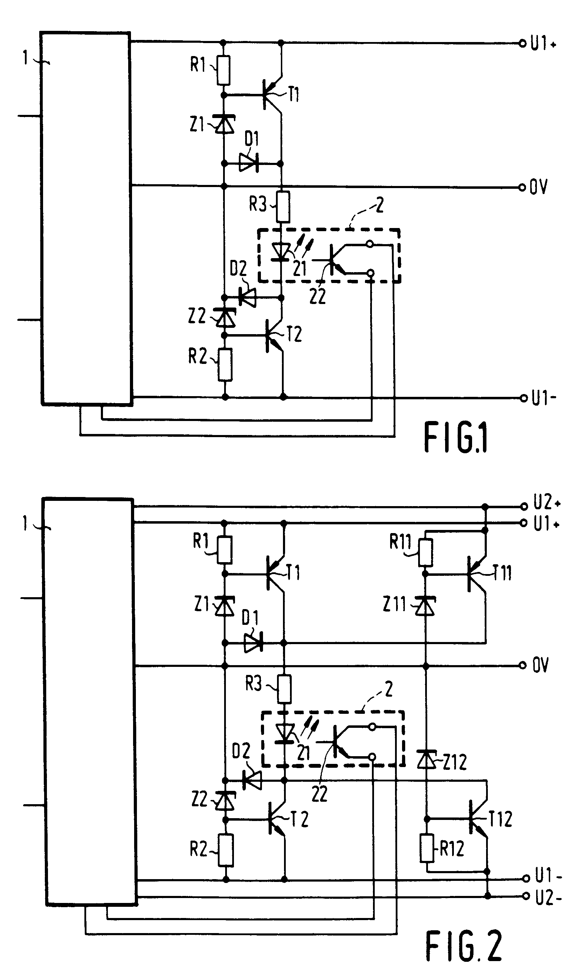

Bei dem in Fig. 1 dargestellten Ausführungsbeispiel liefert eine Stromversorgungseinrichtung 1 eine gegenüber einem Bezugspotential 0V positive Gleichspannung U1+ und eine gegenüber diesem Bezugspotential negative Gleichspannung U1-. Der positive Pol der Gleichspannung U1+ ist mit dem Emitter und über einen Widerstand R1 mit der Basis eines PNP-Transistors T1 verbunden. Die Basis des Transistors T1 ist an die Kathode einer Zenerdiode Z1 angeschlossen, wobei deren Anode mit dem Bezugspotential 0V kontaktiert ist. Eine Diode D1 ist mit ihrer Anode mit dem Bezugspotential 0V und mit ihrer Kathode mit dem Kollektor des Transistors T1 verbunden. Der negative Pol der Gleichspannung U1- ist mit dem Emitter und über einen Widerstand R2 mit der Basis eines NPN-Transistors T2 verbunden. Die Basis des Transistors T2 ist an die Anode einer Zenerdiode Z2 angeschlossen, wobei deren Kathode mit dem Bezugspotential 0V kontaktiert ist. Eine Diode D2 ist mit ihrer Kathode mit dem Bezugspotential 0V und mit ihrer Anode mit dem Kollektor des Transistors T2 verbunden. Zwischen dem Kollektor des Transistors T1 und dem Kollektor des Transistors T2 ist über einen Vorwiderstand R3 ein als Optokoppler 2 realisiertes Signalübertragungselement eingeschaltet. Eine Leuchtdiode 21 ist so geschaltet, daß ihre Kathode mit dem Kollektor des Transistors T2 verbunden ist. Der Optokoppler 2 ist mit einer Steuereinrichtung der Stromversorgungseinrichtung 1 verbunden, so daß bei emittierender Leuchtdiode 21 durch den in einer Fotodiode 22 hervorgerufenen Fotostrom die Gleichspannungen U1+, U1- der Stromversorgungseinrichtung 1 zurückgeregelt oder ganz abgeschaltet werden.

Arbeitet die Stromversorgungseinrichtung im Normalbetrieb, d.h., tritt bei der positiven Gleichspannung U1+ keine Überspannung auf, so erfolgt über den Widerstand R1 durch die in Sperrichtung vorgespannte Zenerdiode Z1 ein Stromfluß. Der der Basis-Emitter-Strecke des Transistors T1 parallel geschaltete Widerstand R1 ist so dimensioniert, daß im ungestörten Zustand ein Spannungsabfall hervorgerufen wird, der kleiner ist als die zum Durchschalten des Transistors notwendige Basis-Emitter-Spannung. Der Transistor T1 ist somit gesperrt. Tritt bei der positiven Gleichspannung U1+ eine Überspannung auf, so wird der Transistor T1 nach dem Überschreiten der zum Durchschalten benötigten Basis-Emitter-Spannung von ca. 0,6 Volt am Widerstand R1 leitend. Der nun fließende Kollektorstrom des Transistors T1 fließt über den Vorwiderstand R3 über die Leuchtdiode 21 des Optokopplers 2 und die Diode D2 zum Bezugspotential 0V. Der Vorwiderstand R3 ist so bemessen, daß der durch die Leuchtdiode 21 fließende Strom zur Lichtemission ausreicht und der durch die Fotodiode 22 hervorgerufene Fotostrom die Gleichspannung U1+ zurückregelt oder abschaltet, andererseits aber kein zu hoher Strom auftritt. Bei einer in der Figur nicht dargestellten Ausführungsform ist dem Signalübertragungselement 2 zur Aufnahme eines Reststroms ein Widerstand und/oder ein Kondensator parallel geschaltet. Bei einer impulsbreitengesteuerten Stromversorgungseinrichtung kann die Verminderung der Gleichspannung U1+ beispielsweise durch Verringern der Steuerimpulsbreiten bewirkt werden.

Tritt hingegen die Überspannung bei der negativen Gleichspannung U1- auf, so fließt der Strom vom Bezugspotential über die Diode D1, den Vorwiderstand R3, die Leuchtdiode 21 des Optokopplers 2 und über den leitenden Transistor T2 zur Gleichspannung U1-. Bei einer praktisch ausgeführten Überspannungsüberwachungsschaltung beträgt der Wert der Gleichspannungen U1+, U1- +/- 5 Volt. Dabei ist die Zenerspannung der Zenerdioden Z1, Z2 mit 5,1 Volt und der Widerstandswert der Widerstände R1, R2 mit 1 kOhm dimensioniert. Die Ansprechgenauigkeit der Überspannungsüberwachungsschaltung wird damit allein durch die Toleranzen der Zenerdioden Z1, Z2 und die Basis-Emitter-Strecken der Transistoren T1, T2 bestimmt und ist damit unabhängig vom Kollektorkreis der Transistoren T1, T2 und somit unabhängig von den Toleranzen des Vorwiderstands R3 sowie des Signalübertragungselements 2. Daher ist die Überspannungsüberwachungsschaltung, insbesondere auch bei Anforderungen an eine erhöhte Ansprechgenauigkeit, geeignet.

Bei dem in der Fig. 2 dargestellten Ausführungsbeispiel werden neben den Gleichspannungen U1+, U1- des in der Fig. 1 gezeigten Ausführungsbeispiels noch zwei weitere Gleichspannungen U2+, U2- überwacht. Hierzu ist der Positive Pol der Gleichspannung U2+ mit dem Emitter und über einen Widerstand R11 mit der Basis eines PNP-Transistors T11 verbunden. Die Basis des Transistors T11 ist an die Kathode einer Zenerdiode Z11 angeschlossen, wobei deren Anode mit dem Bezugspotential 0V kontaktiert ist. Entsprechend ist der negative Pol der Gleichspannung U2- mit dem Emitter und über einen Widerstand R12 mit der Basis eines NPN-Transistors T12 verbunden. Die Basis des Transistors T12 ist an die Anode einer Zenerdiode Z12 angeschlossen, wobei deren Kathode mit dem Bezugspotential 0V kontaktiert ist. Die Zenerspannungen der Zenerdioden Z11, Z12 sind entsprechend den Spannungswerten der Gleichspannungen U2+, U2- gewählt. Mit der in der Fig. 2 dargestellten Überspannungsüberwachungsschaltung können somit bei geringem Aufwand an Bauteilen jeweils zwei Gleichspannungen unterschiedlicher Polarität überwacht werden.

Sollen neben den Gleichspannungen U1+, U1-, U2+, U2- weitere Gleichspannungen unterschiedlicher Polarität überwacht werden, so braucht die Schaltung der Fig. 2 lediglich um eine entsprechende Anordnung eines Transistors, eines Widerstands und einer Zenerdiode ergänzt werden, wobei das Signalübertragungselement 2 für alle Gleichspannungen verwendet wird. Bei einer Ausgestaltungsform ist das Signalübertragungselement 2 als Optokoppler mit Thyristorausgang ausgebildet.

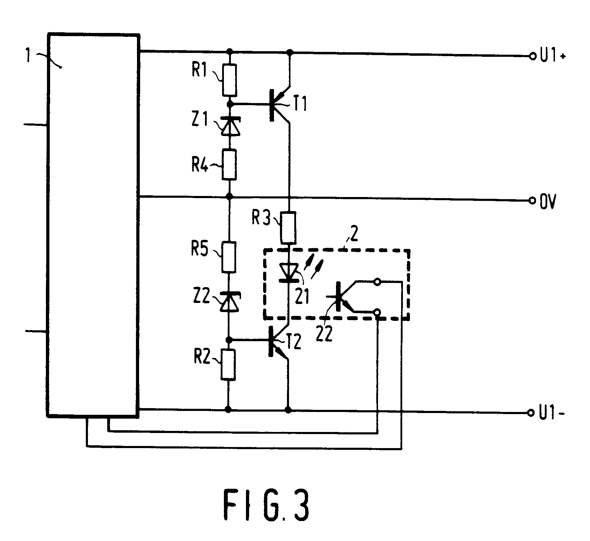

Bei dem in Fig. 3 dargestellten Ausführungsbeispiel liefert eine Stromversorgungseinrichtung 1 die gegenüber dem Bezugspotential 0V positive Gleichspannung U1+ und die gegenüber diesem Bezugspotential negative Gleichspannung U1-. Der positive Pol der Gleichspannung U1+ ist mit dem Emitter und über den Widerstand R1 mit der Basis des Transistors T1 verbunden. Die Basis des Transistors T1 ist an die Kathode der Zenerdiode Z1 angeschlossen, wobei deren Anode über einen Widerstand R4 mit dem Bezugspotential 0V kontaktiert ist. Der negative Pol der Gleichspannung U1- ist mit dem Emitter und über den Widerstand R2 mit der Basis des Transistors T2 verbunden. Die Basis des Transistors T2 ist an die Anode der Zenerdiode Z2 angeschlossen, wobei deren Kathode über einen Widerstand R5 mit dem Bezugspotential 0V kontaktiert ist. Zwischen dem Kollektor des Transistors T1 und dem Kollektor des Transistors T2 ist über einen Vorwiderstand R3 das Signalübertragungselement 2 eingeschaltet. Eine Leuchtdiode 21 ist so geschaltet, daß ihre Kathode mit dem Kollektor des Transistors T2 verbunden ist. Der Optokoppler 2 ist mit einer Steuereinrichtung der Stromversorgungseinrichtung 1 verbunden, so daß bei nicht emittierender Leuchtdiode 21 durch den in der Fotodiode 22 nicht mehr hervorgerufenen Fotostrom die Gleichspannungen U1+, U1- der Stromversorgungseinrichtung 1 entsprechend geregelt oder abgeschaltet werden.

Die Widerstände R1, R2, R4, R5 und die Zenerdioden Z1, Z2 sind so dimensioniert, daß im Normalbetrieb, d.h. wenn keine Unterspannung auftritt, die Transistoren T1, T2 leitend sind. Dazu muß der Spannungsabfall an den Widerständen R1, R2 größer sein, als die zum Durchschalten der Transistoren T1, T2 benötigte Basis-Emitter-Spannung von ca. 0,6 Volt. Der dann fließende Kollektorstrom des Transistors T1 fließt über den Vorwiderstand R3 über die Leuchtdiode 21 des Optokopplers 2 und die ebenfalls leitende Kollektor-Emitter-Strecke des Transistors T2 zum negativen Pol der Gleichspannung U1-. Der Vorwiderstand R3 ist so bemessen, daß der durch die Leuchtdiode 21 fließende Strom zur Lichtemission ausreicht, andererseits aber kein zu hoher Strom auftritt. Tritt bei der positiven Gleichspannung U1+ eine Unterspannung auf, so wird der Transistor T1 nach dem Unterschreiten der zum Durchschalten benötigten Basis-Emitter-Spannung am Widerstand R1 gesperrt, der gesamte Strom fließt dann über den Widerstand R1 durch die in Sperrichtung vorgespannte Zenerdiode 21 sowie den Widerstand R4 zum Bezugspotential 0V. Nach dem Sperren des Transistors T1 fließt kein Strom mehr durch die Leuchtdiode 21, damit fließt auch kein Fotostrom mehr durch die Fotodiode 22 und die Gleichspannung U1+ kann beispielsweise hochgeregelt oder abgeschaltet werden. Bei einer impulsbreitengesteuerten Stromversorgungseinrichtung kann die Erhöhung der Gleichspannung U1+ beispielsweise durch Erhöhen der Steuerimpulsbreiten bewirkt werden. Tritt hingegen die Unterspannung am Ausgang mit der negativen Gleichspannung U1- auf, so wird der Transistor T2 gesperrt, d.h. es fließt auch in diesem Fall kein Strom mehr durch die Leuchtdiode 21. Der gesamte Strom fließt dann vom Bezugspotential 0V über den Widerstand R5 durch die in Sperrichtung vorgespannte Zenerdiode Z2 und den Widerstand R2 zum negativen Pol der Gleichspannung U1-.

Die Ansprechgenauigkeit der Unterspannungsüberwachungsschaltung wird bei dem in der Fig. 3 gezeigten Ausführungsbeispiel lediglich durch Toleranzen der Zenerdioden Z1, Z2, der Widerstände R4, R5 und der Basis-Emitter-Strecken der Transistoren T1, T2 bestimmt und ist damit unabhängig vom Kollektorkreis der Transistoren T1, T2 und somit unabhängig von den Toleranzen des Vorwiderstands R3 sowie des Signalübertragungselements 2. Daher ist auch die in der Fig. 3 gezeigte Unterspannungsüberwachungsschaltung, insbesondere bei Anforderungen an eine erhöhte Ansprechgenauigkeit, geeignet.

## Patentansprüche

1. Stromversorgungseinrichtung mit Überwachungsschaltung für eine auf ein Bezugspotential (0V) bezogene erste Gleichspannung (U1+) mit einem Signalübertragungselement (2), wobei parallel zur ersten Gleichspannung (U1+) eine Reihenschaltung aus einer Zenerdiode (Z1) und einem an den positiven bzw. negativen Pol der ersten Gleichspannung (U1+) angeschlossenen Widerstand (R1) angeordnet ist und wobei der Verbindungspunkt von Zenerdiode (Z1) und Widerstand (R1) mit der Basis eines Transistors (T1) verbunden und eine erste Elektrode des Transistors (T1) an einen ersten Anschluß des Signalübertragungselementes (2) und eine zweite Elektrode an den positiven bzw. negativen Pol der ersten Gleichspannung (U1+) angeschlossen ist,
dadurch gekennzeichnet,
daß zur Überwachung mindestens einer weiteren Gleichspannung (U1-) mit einer gegenüber der ersten Gleichspannung (U1+) unterschiedlichen Polarität eine weitere Reihenschaltung aus einer weiteren Zenerdiode (Z2) und einem an den positiven bzw. negativen Pol der weiteren Gleichspannung (U1-) angeschlossenen weiteren Widerstand (R2) angeordnet ist, daß der Verbindungspunkt von Zenerdiode (Z2) und Widerstand (R2) mit der Basis eines weiteren Transistors (T2) verbunden und eine erste Elektrode des Transistors (T2) an einen zweiten Anschluß des Signalübertragungselementes (2) und eine zweite Elektrode an den positiven bzw. negativen Pol der weiteren Gleichspannung (U1-) angeschlossen ist, daß die beiden Anschlußklemmen des Signalübertragungselements (2) jeweils über eine Diode (D1, D2) mit dem Bezugspotential (OV) verbunden sind und daß die Überwachungsschaltung so ausgelegt ist, daß bei Auftreten einer Überspannung ein Stromfluß über den dem betroffenen Pol zugeordneten Transistor (T1;T2) über den einen Anschluß durch das Signalübertragungselement (2) und die Diode (D1;D2) des jeweils anderen Anschlusses erfolgt.

2. Stromversorgungseinrichtung mit Überwachungsschaltung für eine auf ein Bezugspotential (0V) bezogene erste Gleichspannung (U1+) mit einem Signalübertragungselement (2), wobei parallel zur ersten Gleichspannung (U1+) eine Reihenschaltung aus einer Zenerdiode (Z1) und einem an den positiven bzw. negativen Pol der ersten Gleichspannung (U1+) angeschlossenen Widerstand (R1) Widerstand (R1) angeordnet ist und wobei der Verbindungspunkt von Zenerdiode (Z1) und Widerstand (R1) mit der Basis eines Transistors (T1) verbunden und eine erste Elektrode des Transistors (T1) an einen ersten Anschluß des Signalübertragungselementes (2) und eine zweite Elektrode an den positiven bzw. negativen Pol der ersten Gleichspannung (U1+) angeschlossen ist,
dadurch gekennzeichnet,
daß zur Überwachung mindestens einer weiteren Gleichspannung (U1-) mit einer gegenüber der ersten Gleichspannung (U1+) unterschiedlichen Polarität eine weitere Reihenschaltung aus einer weiteren Zenerdiode (Z2) und einem an den positiven bzw. negativen Pol der weiteren Gleichspannung (U1-) angeschlossenen weiteren Widerstand (R2) angeordnet ist, daß der Verbindungspunkt von Zenerdiode (Z2) und Widerstand (R2) mit der Basis eines weiteren Transistors (T2) verbunden und eine erste Elektrode des Transistors (T2) an einen zweiten Anschluß des Signalübertragungselementes (2) und eine zweite Elektrode an den positiven bzw. negativen Pol der weiteren Gleichspannung (U1-) angeschlossen ist, daß die beiden Zenerdioden (Z1, Z2) mit dem Bezugspotential (OV) verbunden sind und daß die Überwachungsschaltung so ausgelegt ist, daß über die beiden Transistoren (T1, T2) Strom durch das Signalübertragungselement (2) fließt, wenn beide Gleichspannungen (U1+, U1-) normale Werte aufweisen, und daß bei Auftreten einer Unterspannung der dem betroffenen Pol zugeordnete Transistor (T1; T2) den Stromfluß unterbricht.

3. Stromversorgungseinrichtung mit Überwachungsschaltung nach Anspruch 1,
dadurch gekennzeichnet,
daß zur Überwachung weiterer Gleichspannungen (U2+, U2-) unterschiedlicher Polarität parallel zur jeweiligen Gleichspannung (U2+, U2-) eine weitere Reihenschaltung aus einer weiteren Zenerdiode (Z11, Z12) und einem an den positiven bzw. negativen Pol der weiteren Gleichspannung (U2+, U2-) angeschlossenen weiteren Widerstand (R11, R12) angeordnet ist, wobei der Verbindungspunkt von Zenerdiode (Z11, Z12) und Widerstand (R11, R12) jeweils mit der Basis eines weiteren Transistors (T11, T12) verbunden und eine erste Elektrode jedes Transistors (T11, T12) an das Signalübertragungselement (2) und eine zweite Elektrode an den positiven bzw. negativen Pol der Gleichspannung (U2+, U2-) angeschlossen ist.

4. Stromversorgungseinrichtung mit Überwachungsschaltung nach einem der Ansprüche 1 bis 3,
dadurch gekennzeichnet,
daß zwischen jeder Zenerdiode (Z1, Z2) und dem Bezugspotential (OV) ein weiterer Widerstand (R4, R5) angeordnet ist.

5. Stromversorgungseinrichtung mit Überwachungsschaltung nach einem der Ansprüche 1 bis 4,
dadurch gekennzeichnet,
daß die erste Elektrode des Transistors (T1, T2) als Kollektor und die zweite Elektrode als Emitter ausgebildet ist.

6. Stromversorgungseinrichtung mit Überwachungsschaltung nach einem der Ansprüche 1 bis 5,
dadurch gekennzeichnet,
daß die Zenerdioden (Z1, Z2) in Sperrichtung vorgespannt sind.

7. Stromversorgungseinrichtung mit Überwachungsschaltung nach einem der Ansprüche 1 bis 6,
dadurch gekennzeichnet,
daß in Serie zum Signalübertragungselement (2) ein Vorwiderstand (R3) geschaltet ist.

8. Stromversorgungseinrichtung mit Überwachungsschaltung nach einem der Ansprüche 1 bis 7,
dadurch gekennzeichnet,
daß das Signalübertragungselement (2) ein Optokoppler ist.

9. Stromversorgungseinrichtung mit Überwachungsschaltung nach einem der Ansprüche 1 bis 8,
dadurch gekennzeichnet,
daß dem Signalübertragungselement (2) ein Widerstand und/oder ein Kondensator parallelgeschaltet ist.

10. Stromversorgungseinrichtung mit Überwachungsschaltung nach einem der Ansprüche 1 bis 9,
dadurch gekennzeichnet,
daß das Signalübertragungseiement (2) mit einer Steuereinrichtung der Stromversorgungseinrichtung (1) verbunden ist.

## Claims

1. Power supply arrangement which includes a monitoring circuit for a first DC voltage (U1+) connected to a reference potential (OV), said monitoring circuit comprising a signal transmission element (2), while a series combination, formed by a zener diode (Z1) and a resistor (R1) connected to the positive or negative pole respectively, of the first DC voltage (U1+), is connected in parallel with the first DC voltage (U1+), the junction point between zener diode (Z1) and resistor (R1) is connected to the base of a transistor (T1), and a first electrode of the transistor (T1) is connected to a first terminal of the signal transmission element (2), and a second electrode to the positive or negative pole respectively, of the first DC voltage (U1+), characterized in that for monitoring at least a further DC voltage (U1-) having a different polarity from the first DC voltage (U1+), a further series combination, formed by a further zener diode (Z2) and a further resistor (R2) connected to the positive or negative pole respectively, of the further DC voltage (U1-), is provided, in that the junction point of the zener diode (Z2) and the resistor (R2) is connected to the base of a further transistor (T2), and a first electrode of the transistor (T2) is connected to a second terminal of the signal transmission element (2), and a second electrode to the positive or negative pole respectively, of the further DC voltage (U1-), in that the two terminals of the signal transmission element (2) are connected *via* a respective diode (D1, D2) to the reference potential (OV) and in that the monitoring circuit is structured in such a way that, in the case of an overvoltage, a current will flow through the signal transmission element (2) *via* the transistor (T1; T2) allocated to the respective pole *via* the one terminal and the diode (D1; D2) of the respective other terminal.

2. Power supply arrangement which includes a monitoring circuit for a first DC voltage (U1+) connected to a reference potential (OV), said monitoring circuit comprising a signal transmission element (2), while a series combination, formed by a zener diode (Z1) and a resistor (R1) connected to the positive or negative pole respectively, of the first DC voltage (U1+), is connected in parallel with the first DC voltage (U1+), the junction point between zener diode (Z1) and resistor (R1) is connected to the base of a transistor (T1), and a first electrode of the transistor (T1) is connected to a first terminal of the signal transmission element (2), and a second electrode to the positive or negative pole respectively, of the first DC voltage (U1+), characterized in that for monitoring at least a further DC voltage (U1-) having a different polarity from the first DC voltage (U1+), a further series combination, formed by a further zener diode (Z2) and a further resistor (R2) connected to the positive or negative pole respectively, of the further DC voltage (U1-), is provided, in that the junction point of the zener diode (Z2) and the resistor (R2) is connected to the base of a further transistor (T2), and a first electrode of the transistor (T2) is connected to a second terminal of the signal transmission element (2), and a second electrode to the positive or negative pole respectively, of the further DC voltage (U1-), in that the two zener diodes (Z1, Z2) are connected to the reference potential (OV) and in that the monitoring circuit is structured in such a way that, in the case of the two DC voltages (U1+, U1-) having normal values, a current will flow through the signal transmission element (2) *via* the two transistors (T1, T2) and, in the case of an undervoltage, the transistor (T1, T2) allocated to the respective pole interrupts the current flow.

3. Power supply arrangement which includes a monitoring circuit as claimed in Claim 1, characterized in that for monitoring further DC voltages (U2+, U2-) having different polarities a further series combination, formed by a further zener diode (Z11, Z12) and a further resistor (R11, R12) connected to the positive or negative pole respectively, of the further DC voltage (U2+, U2-), is connected in parallel with the respective DC voltage (U2+, U2-), the junction point between zener diode (Z11, Z12) and resistor (R11, R12) is connected to the base of a further transistor (T11, T12), and a first electrode of each transistor (T11, T12) is connected to the signal transmission element (2), and a second electrode to the positive or negative pole respectively, of the DC voltage (U2+, U2-).

4. Power supply arrangement which includes a monitoring circuit as claimed in one of the Claim 1 to 3, characterised in that a further resistor (R4, R5) is connected between each zener diode (Z1, Z2) and the reference potential (OV).

5. Power supply arrangement which includes a monitoring circuit as claimed in one of the Claims 1 to 4, characterised in that the first electrode of the transistor (T1, T2) comprises its a collector and the second electrode its emitter.

6. Power supply arrangement which includes a monitoring circuit as claimed in one of the Claims 1 to 5, characterised in that the zener diodes (Z1, Z2) are reverse biased.

7. Power supply arrangement which includes a monitoring circuit as claimed in one of the Claims 1 to 6, characterised in that a dropping resistor (R3) is connected in series with the signal transmission element (2).

8. Power supply arrangement which includes a monitoring circuit as claimed in one of the Claims 1 to 7, characterised in that the signal transmission element (2) is an optocoupler.

9. Power supply arrangement which includes a monitoring circuit as claimed in one of the Claims 1 to 8, characterised in that a resistor and/or a capacitor is connected in parallel with the signal transmission element (2).

10. Power supply arrangement which includes a monitoring circuit as claimed in one of the Claims 1 to 9, characterised in that the signal transmission element (2) is connected to a control circuit of the power supply arrangement (1).

## Revendications

1. Dispositif d'alimentation en courant à circuit de surveillance pour une première tension continue (U1+) rapportée à un potentiel de référence (0V), comportant un élément de transmission de signaux (2), étant entendu qu'un montage en série d'une diode Zener (Z1) et d'une résistance (R1) connectée au pôle positif ou négatif de la première tension continue (U1+) est agencé en parallèle avec la première tension continue (U1+), que, le point de jonction de la diode Zener (Z1) et de la résistance (R1) est relié à la base d'un transistor (T1), qu'une première électrode du transistor (T1) est connectée à une première borne de l'élément de transmission de signaux (2) et qu'une deuxième électrode est connectée au pôle positif ou négatif de la première tension continue (U1+), caractérisé en ce que, pour surveiller au moins une autre tension continue (U1-) ayant une polarité différente de celle de la première tension continue (U1+), un autre montage en série d'une autre diode Zener (Z2) et d'une autre résistance (R2) connectée au pôle positif ou négatif de l'autre tension continue (U1-), est prévue, que le point de jonction de la diode Zener (Z2) et de la résistance (R2) est relié à la base d'un autre transistor (T2), qu'une première électrode du transistor (T2) est connectée à une deuxième borne de l'élément de transmission de signaux (2), qu'une deuxième électrode est connectée au pôle positif ou négatif de l'autre tension continue (U1-), que les deux bornes de connexion de l'élément de transmission de signaux (2) sont connectées respectivement via une diode (D1, D2) au potentiel de référence (0V) et que le circuit de surveillance est conçu, de telle sorte qu'à l'apparition d'une surtension, un flux de courant se produise via le transistor (T1; T2) associé au pôle concerné, via la première borne, à travers l'élément de transmission de signaux (2) et la diode (D1; D2) de l'autre borne respective.

2. Dispositif d'alimentation en courant à circuit de surveillance pour une première tension continue (U1+) rapportée à un potentiel de référence (0V), comportant un élément de transmission de signaux (2), étant entendu qu'un montage en série d'une diode Zener (Z1) et d'une résistance (R1) connectée au pôle positif ou négatif de la première tension continue (U1+) est agencé en parallèle avec la première tension continue (U1+), que le point de jonction de la diode Zener (Z1) et de la résistance (R1) est relié à la base d'un transistor (T1), qu'une première électrode du transistor (T1) est connectée à une première borne de l'élément de transmission de signaux (2) et qu'une deuxième électrode est connectée au pôle positif ou négatif de la première tension continue (U1+), caractérisé en ce que, pour surveiller au moins une autre tension continue (U1-) d'une polarité différente de celle de la première tension continue (U1+), un autre montage en série d'une autre diode Zener (Z2) et d'une autre résistance (R2) connectée au pôle positif ou négatif de l'autre tension continue (U1-) est prévue, que, le point de jonction de la diode Zener (Z2) et de la résistance (R2) est relié à la base d'un autre transistor (T2), qu'une première électrode du transistor (T2) est connectée à une deuxième borne de l'élément de transmission de signaux (2), qu'une deuxième électrode est connectée au pôle positif ou négatif de l'autre tension continue (U1-), que les deux diodes Zener (Z1, Z2) sont connectées au potentiel de référence (0V) et que le circuit de surveillance est conçu, de telle sorte qu'un courant s'écoule via les deux transistors (T1, T1) à travers l'élément de transmission de signaux (2) lorsque les deux tensions continues (U1+, U1-) présentent des valeurs normales et qu'à l'apparition d'une sous-tension, le transistor (T1; T2) affecté au pôle concerné interrompe le flux de courant.

3. Dispositif d'alimentation en courant à circuit de surveillance selon la revendication 1, caractérisé en ce que, pour surveiller d'autres tensions continues (U2+, U2) de polarités différentes, on agence en parallèle avec la tension continue respective (U2+, U2-) un autre montage en série d'une diode Zener (Z11, Z12) et d'une autre résistance (R11, R12) connectée au pôle positif ou négatif de l'autre tension continue (U2+, U2-), étant entendu que le point de jonction de la diode Zener (Z11, Z12) et de la résistance (R11, R12) est connecté chaque fois à la base d'un autre transistor (T11, T12) et une première électrode de chaque transistor (T11, T12) est connectée à l'élément de transmission de signaux (2), tandis qu'une deuxième électrode est connectée au pôle positif ou négatif de la tension continue (U2+, U2-).

4. Dispositif d'alimentation en courant à circuit de surveillance selon l'une quelconque des revendications 1 à 3, caractérisé en ce qu'une autre résistance (R4, R5) est disposée entre chaque diode Zener (Z1, Z2) et le potentiel de référence (0V).

5. Dispositif d'alimentation en courant à circuit de surveillance selon l'une quelconque des revendications 1 à 4, caractérisé en ce que la première électrode du transistor (T1, T2) est un collecteur et la deuxième électrode est un émetteur.

6. Dispositif d'alimentation en courant à circuit de surveillance selon l'une quelconque des revendications 1 à 5, caractérisé en ce que les diodes Zener (Z1, Z2) sont prépolarisées en sens bloquant.

7. Dispositif d'alimentation en courant à circuit de surveillance selon l'une quelconque des revendications 1 à 6, caractérisé en ce qu'une résistance série (R3) est montée en série avec l'élément de transmission de signaux (2).

8. Dispositif d'alimentation en courant à circuit de surveillance selon l'une quelconque des revendications 1 à 7, caractérisé en ce que l'élément de transmission de signaux (2) est un optocoupleur.

9. Dispositif d'alimentation en courant à circuit de surveillance selon l'une quelconque des revendications 1 à 8, caractérisé en ce qu'une résistance et/ou un condensateur sont montés en parallèle avec l'élément de transmission de signaux (2).

10. Dispositif d'alimentation en courant à circuit de surveillance selon l'une quelconque des revendications 1 à 9, caractérisé en ce que l'élément de transmission de signaux (2) est relié à un dispositif de commande du dispositif d'alimentation en courant (1).
